# FASCICULE DE BREVET EUROPEEN

(11) **EP 2 568 406 B1**
(45) Date de publication et mention de la délivrance du brevet: **31.10.2018**
(21) Numéro de dépôt: 12183656.3
(22) Date de dépôt: 10.09.2012
(51) Int. Cl.: G06F 21/35, G06F 21/60, G06F 21/64, H04L 9/08, H04L 9/14, H04L 9/32

(54) **Procédé de mise en oeuvre, a partir d'un terminal, de données cryptographiques d'un utilisateur stockées dans une base de données**
Verfahren zur Verwendung von kryptografischen Daten eines Benutzers, die in einer Datenbank gespeichert sind, von einem Endgerät aus
Implementation method, from a terminal, of cryptographic data for a user stored in a database

(30) Priorité: 09.09.2011 FR 1158042
(43) Date de publication de la demande: 13.03.2013
(73) Titulaire: Dictao, 75116 Paris (FR)
(72) Inventeur: Daouphars, Raphaël, 75116 Paris (FR); Desperrier, Jean-Marc, 75116 Paris (FR); Fournie, Laurent, 75116 Paris (FR)
(74) Mandataire: Jacobacci Coralis Harle

(56) Documents cités:
- US-A1- 2003 204 732
- US-A1- 2007 297 606
- US-B1- 7 237 114
- US-B2- 7 725 723
- DAMGARD I ET AL: "commitment schemes and zero-knowledge protocols", INTERNET CITATION, 1999, XP002381007, Extrait de l'Internet: URL:http://www.daimi.au.dk/ ivan/ComZK06.pdf [extrait le 2006-05-15]

## Description

La présente invention concerne le domaine technique de l'utilisation, d'une manière sécurisée, des données cryptographiques d'un utilisateur en vue d'effectuer des traitements cryptographiques au moyen de ces données.

Dans le cadre de la présente invention, il faut entendre par données cryptographiques de l'utilisateur, des données cryptographiques qu'il convient de garder secrètes afin de préserver la fiabilité du traitement cryptographique et du processus dans le cadre duquel il intervient. Dans le cadre, par exemple, d'un processus intervenant dans une infrastructure à clés publiques, PKI pour en anglais Public Key Infrastruture, les données cryptographiques au sens de l'invention comprennent la clé secrète de l'utilisateur qui ne doit être utilisable que par ce dernier ou avec l'accord de ce dernier et, éventuellement, connue de ce dernier par opposition à la clé publique de l'utilisateur qui peut être connue de tout un chacun et utlisable par tout un chacun sans risque de corruption des processus cryptographiques mettant en oeuvre le couple clé publique/clé secrète de l'utilisateur.

Afin de contrôler l'utilisation de telles données cryptographiques d'un utilisateur, il est connu de mettre en oeuvre une carte à puce comprenant un module de sécurité à l'intérieur duquel les données cryptographiques de l'utilisateur sont enregistrées. L'accès à ces données cryptographiques et leur utilisation au sein du module de sécurité de la carte à puce sont alors contrôlés au moyen d'un code connu du seul utilisateur qui le saisit au moment du déverrouillage de la carte à puce. La fiabilité d'une telle carte à puce a largement été démontrée. Toutefois, l'utilisation d'une carte à puce impose de disposer, au niveau du système informatique requérant la mise en oeuvre des données cryptographiques de l'utilisateur, d'un lecteur de cartes à puce et de l'ensemble des programmes ou pilotes nécessaires au fonctionnement du lecteur et à l'accès à la carte à puce en elle-même. Or, cette contrainte matérielle et logicielle n'est pas compatible avec l'utilisation des systèmes informatiques mobiles tels que les ordinateurs portables, les tablettes informatiques ou encore les téléphones intelligents qui offrent rarement la possibilité de mettre en oeuvre un lecteur de carte à puce.

Afin de permettre de réaliser une signature sur un serveur de signature en utilisant les donnée cryptographique associées à un utilisateur spécifique, un document US 7,725,723 B2 a proposé d'authentifier à la fois l'utilisateur ainsi que le terminal qu'il utilise avant d'autoriser la signature des données transmises par l'utilisateur.

Cependant l'objectif que se donne ce document d'assurer que les données cryptographiques soit bien sous le contrôle exclusif de l'utilisateur se heurte à plusieurs difficultés avec les méthodes qui y sont proposées.

Les données cryptographiques étant dans cette solution uniquement chiffrées par les moyens du serveur de signature, toute attaque portant sur le serveur de signature, ou utilisant le dévoiement d'un des administrateurs de ce serveur peut permettre l'utilisation de la clé sans l'approbation de son propriétaire légitime.

Au-delà de ce risque, ceci a une autre conséquence qui est l'absence d'un lien direct et immuable reliant le terminal, l'utilisateur, et les données cryptographiques.

L'absence d'un tel lien signifie que toute faiblesse dans le serveur qui conduirait à une possibilité de mauvaise identification du terminal, de mauvaise identification de l'utilisateur, ou d'erreur dans le lien entre l'utilisateur identifié et la donnée cryptographique à laquelle il a accès, ou dans le cas où des limitations sont présentes sur les clés qui peuvent être utilisés à partir d'un terminal donné, d'erreur entre dans le lien entre le terminal et la ou les clés autorisées depuis ce terminal, donne immédiatement la possibilité à un mauvais utilisateur d'utiliser les données cryptographiques. La même possibilité est aussi envisageable pour un utilisateur qui n'utilise pas le bon terminal, et qui peut ainsi être un attaquant qui réussit à voler le secret de l'utilisateur sans parvenir à voler son terminal.

De plus, les divers moyens d'authentification proposés dans le document reposant sur des secrets identiques présent à la fois au niveau de l'utilisateur ou du terminal et du serveur ne permettent pas non plus d'apporter des propriétés de non-répudiation, garantissant que seuls les secrets en la possession exclusive de l'utilisateur ou de son terminal ont pu permettre d'ouvrir légitimement le canal.

Afin d'essayer de lever cette difficulté, le document propose en particulier d'utiliser un serveur d'authentification qui transmet uniquement un élément dérivé du secret au serveur de signature et non pas le secret lui-même. L'utilisateur ou le terminal calculent alors la valeur dérivée avant de l'envoyer au serveur qui la compare avec celle qu'il a reçu.

Mais un attaquant ayant réussi à prendre possession de la valeur dérivée stockée sur le serveur peut se contenter de l'envoyer directement et être authentifié avec succès. Le serveur ne recevant pas le secret d'origine ne peut réellement garantir que l'utilisateur est réellement en sa possession. Cette méthode n'apporte donc pas vraiment d'avantage réel par rapport à l'envoi direct de part et d'autre du secret et ne permet pas en particulier la non-répudiation de l'authentification.

Ainsi donc la plupart des méthodes d'authentifications enseignées par le document revienne à la comparaison directe d'un secret envoyé par l'utilisateur à celui stocké sur le serveur, ou bien à l'utilisation d'un moyen d'authentification externe physique préalablement fourni à l'utilisateur. Ce qui présente le même inconvénient que l'usage d'une carte à puce.

Par ailleurs, selon ce document, le terminal n'est pas lié de manière exclusive à un utilisateur spécifique. Ceci signifie qu'il est a priori possible à partir de n'importe quel terminal reconnu par le système d'utiliser la clé de n'importe quel utilisateur dont on a pu obtenir un élément d'identification. Ceci est une résultante de l'objectif d'itinérance en anglais « roaming » sur l'utilisation de la clé que se donne le document, mais affaibli fortement la sécurité qui devrait être apportée par la double authentification du terminal et du porteur.

Le document propose une implémentation dans laquelle le secret que l'utilisateur doit utiliser pour s'authentifier lui est envoyé par un message de type SMS. Afin de mettre en place une double authentification réelle avec ce type de moyen, l'utilisateur doit disposer à la fois de ce téléphone d'un coté pour recevoir le SMS, et d'un autre terminal utilisé dans la connexion, car la double authentification n'est pas réelle si le même élément physique est utilisé pour recevoir le code et pour l'authentification du terminal.

La solution décrite ne peut donc être utilisée pour apporter un niveau de sécurité en utilisant un élément terminal unique, sans requérir aucune autre ressource matérielle.

De plus des exemple d'attaque récente dans lesquelles des fraudeurs ont réussi à obtenir à la place de l'utilisateur légitime l'envoi de la part de l'opérateur téléphonique d'une carte SIM de remplacement associée au même numéro de téléphone et ainsi à pouvoir recevoir le message d'authentification à la place de l'utilisateur ont démontré la faiblesse de ce type de solution qui en réalité n'authentifient pas physiquement le terminal de l'utilisateur, mais son numéro de téléphone. Avec ce type d'attaque, la sécurité de la partie authentification de l'utilisateur décrite peut être compromise, et l'accès au terminal où à une copie du secret fixe qu'il porte suffit alors à utiliser les données cryptographiques de l'utilisateur, sans que les moyens proposés par le document apportent de solution.

En fin de compte au vu des attaques connues aujourd'hui, la solution décrite n'apporte un niveau de sécurité élevé de l'authentification de l'utilisateur que quand un moyen physique d'authentification externe est disponible, ce qui représente une contrainte forte sur son déploiement. Le document US2003/0204732 A1 divulgue lui aussi une méthode permettant à un utilisateur d'accéder depuis un client en réseau à un secret cryptographique stocké sous forme chiffrée sur un serveur. Cette méthode utilise un chiffrement à partir d'une clé établie sur la base d'un secret du serveur et d'un mot de passe présent sur un jeton de sécurité utilisateur. Cette méthode requiert donc elle aussi l'utilisation d'un jeton matériel.

Il est donc apparu le besoin d'un nouveau procédé de mise en oeuvre des données cryptographiques d'un utilisateur qui, d'une part, offre des garanties de sécurité équivalentes voire supérieures à celles d'une carte à puce tout en ne présentant pas les mêmes contraintes matérielles au niveau du dispositif informatique requérant la mise en oeuvre des données cryptographiques de l'utilisateur et, d'autre part, permet d'apporter une solution aux failles des procédés selon l'art antérieur évoquées précédéement.

Afin d'atteindre cet objectif, l'invention concerne un procédé de mise en oeuvre, par un module de sécurité, de données cryptographiques d'un utilisateur stockées dans une base de données, au moyen d'un terminal à l'usage de l'utilisateur et communiquant avec le module de sécurité via un réseau de communication, procédé comprenant les étapes suivantes:
- une séquence d'authentification comprenant les étapes successives suivantes :
   - authentification mutuelle entre le module de sécurité et le terminal, reposant sur un protocole de cryptographie asymétrique, établissant un canal sécurisé entre le module de sécurité et le terminal,
   - en cas d'authentification mutuelle positive du module de sécurité et du terminal, authentification mutuelle du module de sécurité et de l'utilisateur,
- en cas d'authentification mutuelle positive entre, d'une part, le module de sécurité et le terminal et, d'autre part, le module de sécurité et l'utilisateur :
   - obtention des données cryptographiques de l'utilisateur par le module de sécurité auprès de la base de données, les données cryptographiques étant stockées dans la base de données sous une forme chiffrée au moyen d'au moins une première clé de chiffrement établie à partir d'au moins une clé sécrète du terminal et de l'élément d'authentification de l'utilisateur et d'une deuxième clé de chiffrement l'élément d'authentification de l'utilisateur et d'une deuxième clé de chiffrement propre au module de sécurité, le chiffrement au moyen de la deuxième clé de chiffrement intervenant à après le chiffrement au moyen de la première clé de chiffrement,
   - calcul par le terminal de la première clé de chiffrement,
   - envoi via le canal sécurisé par le terminal au module de sécurité, de la première clé de chiffrement,
   - mise en oeuvre des données cryptographiques de l'utilisateur par le module de sécurité après déchiffrement, par le module de sécurité des données cryptographiques de l'utilisateur au moins au moyen tout d'abord la deuxième clé de chiffrement puis de la première clé de chiffrement.

Selon l'invention, la mise en oeuvre des données cryptographiques de l'utilisateur n'est rendue possible qu'en cas d'authentification positive de l'utilisateur et d'authentification positive du terminal ainsi que d'authentification positive du module de sécurité. Le cumul de ces deux authentifications permet une très grande de sécurité.

En effet, l'authentification est un processus qui fait intervenir la mise en oeuvre d'une donnée qui, normalement, n'est susceptible d'être détenue que par l'élément à authentifier. Cette donnée est généralement secrète ou ne peut être obtenue qu'à partir de l'élément à authentifier. L'identification se distingue de l'authentification en ce que pour l'identification il est utilisé une donnée, généralement appelée identifiant, qui n'est pas nécessairement secrète et peut-être largement connue ou divulguée. Ainsi, la simple identification n'offre pas une grande garantie de sécurité dans la mesure où un identifiant peut-être utiliser par un tiers ayant eu accès compte tenu du caractère public ou quasi public de cet identifiant. Dans un couple identifiant/authentifiant, l'identifiant peut-être utilisé comme index permettant de retrouver l'authentifiant à mettre en oeuvre pour procéder à l'opération d'authentification. Ainsi l'authentification peut être considérée comme étant, dans certain cas, la combinaison d'une identification et de la vérification de la possession d'un secret ou d'une information particulièrement difficile à obtenir. Il doit être remarqué que sur un système électronique à l'usage d'une seule personne l'authentification peut ne faire intervenir que la vérification de la connaissance du secret ou de l'information réputée difficile à obtenir.

Dans le cas de l'authentification d'un utilisateur, il est souvent utilisé comme donné d'authentification un mot de passe et une phrase connue du seul utilisateur également appelé PIN, pour en anglais Personal Identification Number. Afin d'en permettre une mémorisation facile, le mot de passe est généralement court et ne comprend qu'un nombre limité de caractères par exemple entre quatre et six. Ainsi le mode passe PIN peut-être facilement trouvé dans le cadre d'une attaque par force brute. Afin de caractériser cette faiblesse il est dit que le mot de passe PIN présente une faible entropie.

Dans le cas de l'authentification d'un dispositif électronique, la taille de la donnée d'authentification n'est pas un problème et il est possible d'utiliser une donnée présentant une grande taille et donc difficile à trouver dans le cas d'une attaque par force brute. La donnée d'authentification du terminal présente donc une grande entropie par rapport à la donnée d'authentification de l'utilisateur.

L'utilisation en combinaison de l'authentification de l'utilisateur et de l'authentification du terminal à son usage, telle que proposée par l'invention, permet d'obtenir une authentification présentant une plus grande entropie que l'authentification qui résulte de la seule utilisation du mot de passe de l'utilisateur. Selon l'invention, l'étape de contrôle de l'authenticité du terminal intervient avant l'obtention des données cryptographique de l'utilisateur par le module de sécurité. Ainsi, il est évité que les données cryptographiques de l'utilisateur ne transitent vers le module de sécurité avant que l'authentification du terminal n'est été réalisée de façon positive.

Au sens de l'invention, il convient de comprendre par authentification asymétrique un protocole dans lequel une entité A prouve son identité à une autre entité B sans révéler d'information permettant à B d'usurper l'identité de A. En pratique, ces protocoles sont mis en oeuvre sous la forme d'un échange de type « défi/réponse » à partir d'algorithme cryptographique asymétrique (RSA, courbe elliptique) ou à divulgation nulle de connaissance. Ces protocole garantissent la non-répudiation de la preuve d'authentification, car seule l'entité A est en mesure de réaliser la séquence cryptographique démontrant son identité.

Dans le cas de l'invention, il y a authentification du terminal, de l'utilisateur et du module de sécurité, toutes ces authentifications intervenant avant la transmission de la première clé secrète. Il est à noter que l'authentification du module de sécurité induit une grande fiabilité du procédé selon l'invention supérieure à celle qui résulterait de la seule authentification du terminal et de l'utilisateur. En effet, si le serveur se trompe dans l'authentification de l'utilisateur, la clé de l'utilisateur ne sera pas déchiffrable. En revanche, s'il y a une erreur dans l'authentification du serveur, les moyens de déchiffrer la clé privée de l'utilisateur, à savoir la première clé de chiffrement, sont envoyés à la mauvaise entité

Selon l'invention, les échanges de données entre le terminal et le module de sécurité sont effectués dans le cadre d'une communication sécurisée établie lors de l'authentification mutuelle ce qui augmente la résilience de l'invention aux attaques ou aux fuites. Cette authentification mutuelle peut par exemple être effectuée dans le cadre d'un protocole SSL pour, en anglais, Secure Sockets Layer encore appelé TLS pour, en anglais, Transport Layer Security. Cette authentification mutuelle peut également être réalisée dans le cadre d'un protocole à divulgation nulle utilisant une preuve de connaissance de la clé sécrète du terminal et/ou une preuve de connaissance du mot passe de l'utilisateur.

Selon l'invention, la première clé de chiffrement est établie à partir d'au moins la clé sécrète du terminal et du mot de passe de l'utilisateur. La première clé de chiffrement est alors être établie par le terminal à chaque demande de mise en oeuvre des paramètres cryptographiques de l'utilisateur. La première clé de chiffrement ainsi établie permet de s'assurer qu'on est en présence du terminal et de l'utilisateur et que l'utilisateur a donné, par la saisie de son mot de passe, son consentement à la mise en oeuvre de ses données cryptographiques. En effet, le déchiffrement des données cryptographiques de l'utilisateur ne peut être effectué qu'au moyen de la première clé de chiffrement qui ne peut être établie qu'à partir de la clé secrète du terminal et du mot de passe de l'utilisateur. Le déchiffrement réussi des données cryptographique de l'utilisateur démontre bien la possession de la clé secrète du terminal et la connaissance du mot de passe de l'utilisateur ce qui correspond à une authentification du terminal et de l'utilisateur.

En outre, Le stockage des données cryptographiques de l'utilisateur dans la base de données sous une forme chiffrée au moyen de la première clé de chiffrement établie à partir d'au moins une clé sécrète du terminal et de l'élément d'authentification de l'utilisateur, permet, d'un coté, de garantir que cette première clé de chiffrement soit de forte entropie à travers la mise en oeuvre de la clé secrète du terminal et, de l'autre, à travers la mise en oeuvre de l'élément d'authentification de l'utilisateur, de garantir que la première clé de chiffrement n'est calculée qu'en présence de l'utilisateur ce qui assure la non répudiation par l'utilisateur de la mise en oeuvre de ses données cryptographiques.

Cette première clé de chiffrement constitue donc un élément essentiel de la sécurité de la solution, et la première phase d'authentification du terminal et de l'utilisateur a pour objet tout autant, si ce n'est encore plus, d'authentifier le serveur vis-à-vis du terminal et de l'utilisateur, que l'inverse, avant de transmettre ce secret.

Selon l'invention, les données cryptographiques de l'utilisateur sont donc chiffrées par deux étapes de chiffrement successives :
- une première étape de chiffrement des données cryptographiques de l'utilisateur au moyen d'une clé de chiffrement choisie entre la première clé de chiffrement et la deuxième clé de chiffrement,
- une deuxième étape de chiffrement du résultat chiffré de la première étape de chiffrement au moyen de la clé de chiffrement qui n'a pas été utilisée à la première étape.

Le stockage des données cryptographiques l'utilisateur sous une forme chiffrée en dernier au moyen de la clé du module de sécurité dans la base de données qui n'est pas nécessairement intégrée au module de sécurité évite de devoir sécuriser la base de données dans la mesure où seul le module de sécurité peut réaliser le déchiffrement au moyen de sa clé de chiffrement qui présente une très grande entropie. Ainsi, il est possible d'envisager un stockage des données cryptographiques de l'utilisateur dans le terminal lui-même. un tel stockage local permet à l'utilisateur de parfaitement maitriser la destruction des données cryptographique s'il le souhaite.

De même, la mise en oeuvre d'un module de sécurité qui communique avec le terminal via un réseau de communication permet de faire l'économie de la présence d'un tel module de sécurité sur le terminal et facilite donc la mise en oeuvre du procédé selon l'invention.

Au sens de l'invention, le terminal à l'usage de l'utilisateur peut être tout système informatique mobile ou fixe comprenant, d'une part, une interface homme machine permettant la transmission d'informations du terminal à l'utilisateur et inversement de l'utilisateur au terminal et, d'autre part, une interface de communication avec un réseau de communication. Le terminal à l'usage de l'utilisateur peut, par exemple, être une station de travail fixe, un ordinateur personnel, un ordinateur portable, une tablette ordinateur ou encore un téléphone portable intelligent également appelé « smartphone », sans que cette liste ne soit limitative ou exhaustive.

Par réseau de communication, il convient d'entendre tout réseau de communication permettant la transmission ou l'échange de données numériques ou informatiques entre deux systèmes informatiques distincts peu important la distance les séparant. Au sens de l'invention, le terme réseau de communication vise tout aussi bien, sans que cette liste ne soit limitative ou exhaustive :
- les réseaux locaux également appelés LAN pour en anglais Local Area Network, filaire et/ou hertzien,
- les réseaux étendus également appelés WAN pour en anglais Wide Area Network, filaire et/ou hertzien,
- le réseau Internet,
- les réseaux de téléphonie mobile ou fixe,
et leur combinaison, quelque soit le mode d'accès à ces réseaux et les protocoles mis en oeuvre sur ces derniers.

Par module de sécurité il convient d'entendre un système informatique sécurisé qui comprend un nombre limité d'instructions susceptibles d'être mises en oeuvre dans le cadre de son utilisation normale de manière à limiter les risques de détournement d'utilisation ou de corruption.

Selon l'invention, le module de sécurité peut être un module de sécurité logiciel ou un module de sécurité matériel ou encore une combinaison de module de sécurité logiciel et matériel. Par exemple, sans que cette liste ne soit limitative ou exhaustive, on peut envisager :
- un logiciel opéré par un système d'exploitation renforcé, hébergé sur un serveur sécurisé physiquement ou un boitier inviolable (en anglais Tamper resistant);
- un module matériel sécurisé HSM (pour en anglais Hardware Security Module) spécialisé ou programmable ;
- la combinaison des deux, de manière à réaliser les étapes d'authentification par un logiciel sécurisé et les étapes d'usage de la clé secrète par un matériel sécurisé.

L'authentification fait généralement intervenir une comparaison entre un élément d'authentification transmis par le sujet à authentifier et un élément d'authentification détenu par le système procédant à l'authentification. Selon une caractéristique de l'invention, les étapes de contrôle d'authenticité sont effectuées au moyen :
- d'au moins un élément d'authentification du terminal,
- et d'au moins un élément d'authentification de l'utilisateur,
obtenus par le module de sécurité auprès de la base de donnée, les éléments d'authentification étant stockées dans la base de données sous une forme chiffrée au moyen d'une clé de chiffrement propre au module de sécurité. Il est a noter que cette clé de chiffrement n'est pas nécessairement la même que la deuxième clé de chiffrement utilisée pour le chiffrement des données cryptographiques de l'utilisateur.

Selon l'invention, il peut être mis en oeuvre en tant qu'élément d'authentification de l'utilisateur soit un mot de passe connu de l'utilisateur seulement soit une donnée biométrique qu'il n'est possible de connaître qu'en présence de l'utilisateur comme par exemple une empreinte digitale ou une image rétinienne. Selon l'invention, il peut également être utilisé au moins deux éléments d'authentification de l'utilisateur à savoir un mot de passe et une donnée biométrique.

Selon l'invention, l'élément d'authentification du terminal peut être de toute nature appropriée. Il peut par exemple être utilisé un élément d'authentification du terminal établi en partie au moins à partir d'une clé sécrète du terminal stockée dans le terminal. Une telle clé secrète pourra être avantageusement une clé de plus de 128 bits et de préférence une clé forte de plus de 256 bits qui offre alors une importante entropie. L'élément d'authentification du terminal peut alors comprendre la clé secrète en elle-même. Afin d'éviter les divulgations de la clé sécrète du terminal, l'élément d'authentification est, de préférence, établi à partir de la clé sécrète du terminal sans comprendre la clé secrète en elle-même. Ainsi, l'élément d'authentification du terminal peut comprendre une preuve de possession de la clé secrète du terminal destinée à être utilisée dans le cadre d'un protocole d'authentification à divulgation nulle. La mise en oeuvre d'un tel protocole d'authentification à divulgation nulle, également appelé à divulgation nulle de connaissance en anglais Zero Knowledge protocole, permet d'éviter que la clé sécrète ne soit divulguée pendant la phase d'authentification.

L'implémentation préférée de l'invention à travers un protocole d'authentification de type « augmented zéro knowledge » a donc l'avantage de baser l'authentification du serveur sur des éléments d'authentification directement liés l'un au secret du terminal et l'autre au secret de l'utilisateur, sans jamais divulguer ces secrets lors d'une tentative d'authentification, avant de lui transmettre la première clé établie à partir de ces deux éléments conjointement. Dans cette implémentation, la sécurité des éléments d'authentification est elle aussi importante et il est préférable de les protéger au moyen d'une clé de chiffrement propre au module de sécurité.

Afin de faciliter l'opération d'authentification, il peut également être utilisé un élément d'identification du terminal comprenant un identifiant du terminal Tid. Un tel élément d'identification peut alors être utilisé comme index dans la base de données pour retrouver les données d'authentification utilisées par le module de sécurité.

Selon l'invention l'élément d'authentification de l'utilisateur peut être de toute nature appropriée et, par exemple, comprendre des données biométriques. Selon une forme préférée de mise en oeuvre de l'invention, il est utilisé un élément d'authentification de l'utilisateur établi en partie au moins à partir d'un mot de passe saisi par l'utilisateur. Afin de préserver la confidentialité du mot de passe, ce dernier est saisi par l'utilisateur sur le terminal au moment de l'authentification de l'utilisateur.

L'élément de d'authentification de l'utilisateur peut comprendre le mot de passe en lui-même. Toutefois, afin d'éviter les divulgations du mot de passe de l'utilisateur, l'élément d'authentification de l'utilisateur est de préférence établi à partir du mot de passe de l'utilisateur sans comprendre le mot de passe-même. Ainsi, l'élément d'authentification de l'utilisateur peut comprendre une preuve de connaissance du mot de passe destinée à être utilisée dans le cadre d'un protocole d'authentification à divulgation nulle.

L'authentification du module de sécurité par le terminal de sécurité peut être effectuée par tout moyen approprié connu de l'homme du métier. Cette authentification peut par exemple être effectuée au moyen d'un certificat délivré par une autorité de certification tierce. L'authentification du module de sécurité peut aussi être effectuée au moyen d'un protocole à divulgation nulle. A cet égard, la preuve de connaissance établie à partir la clé sécrète du terminal et/ou le mot de passe de l'utilisateur, détenue et utilisée par le module de sécurité pour authentifier le terminal et l'utilisateur dans le cadre d'un protocole à divulgation nulle peut également être utilisée par le terminal pour authentifier le module dans le cadre d'un protocole à divulgation nulle. En effet, le terminal en possession de sa clé sécrète et, le cas échéant, du mot de passe saisi par l'utilisateur peut calculer la preuve de connaissance détenue par le module de sécurité et donc s'assurer que le module de sécurité est bien en possession de ladite preuve de connaissance.

Selon l'invention la base de données peut être enregistrée dans le module de sécurité. Toutefois selon une variante de l'invention, afin d'éviter « d'encombrer » le module de sécurité, la base de donnée est enregistrée sur un serveur de données distinct du module de sécurité, ce serveur de données communiquant avec le module de sécurité via un réseau de communication. Ce serveur peut alors être le terminal lui-même

Selon une autre caractéristique de l'invention, le module de sécurité est intégré à un serveur de sécurité distant distinct du serveur de données et du terminal.

Selon encore une autre caractéristique de l'invention, la base de données comprend au moins les données suivantes associées à l'utilisateur:
- un élément d'identification de l'utilisateur,
- un élément d'authentification de l'utilisateur,
- un élément d'identification d'au moins un terminal associé à l'utilisateur,
- un élément d'authentification du terminal,
- les données cryptographiques de l'utilisateur.

Afin de garantir leur confidentialité, les données suivantes au moins :
- l'élément d'authentification de l'utilisateur,
- l'élément d'authentification du terminal,
- les données cryptographiques de l'utilisateur,
sont présentes dans la base de données sous une forme chiffrée au moyen d'au moins une clé de chiffrement du module de sécurité.

Afin de garantir leur intégrité, les données suivantes au moins :
- l'association entre l'identifiant et l'authentifiant de l'utilisateur,
- l'association entre l'identifiant et l'authentifiant du terminal,
- l'association entre l'identifiant et les données cryptographiques de l'utilisateur, peuvent être présentes dans la base de données sous une forme signée au moyen d'une clé de signature du module de sécurité.

Selon l'invention les données cryptographiques de l'utilisateur peuvent être utilisées dans différents processus et notamment pour assurer le traitement de différents types de données. Selon une forme de mise en oeuvre de l'invention, le module de sécurité met en oeuvre les données cryptographiques de l'utilisateur pour effectuer des traitements cryptographiques sur des données à traiter reçues via le réseau de communication et sécurisées par le canal sécurisé établi lors de l'authentification mutuelle entre le module de sécurité et le terminal.

Au sens de l'invention, les données à traiter peuvent par exemple comprendre des données utilisées dans le cadre d'un processus de signature numérique d'un document électronique. Ainsi, les données à traiter peuvent comprendre une empreinte numérique du document électronique.

Selon une caractéristique de l'invention, le terminal met en oeuvre un module client qui gère au moins les communications avec le module de sécurité, la saisie de l'élément d'authentification de l'utilisateur, la séquence d'authentification et le calcul de la première clé de chiffrement.

Selon une autre caractéristique de l'invention, le module client est adapté pour :
- conserver la valeur de l'élément d'authentification du client du moment de sa saisie par l'utilisateur et jusqu'au calcul de la première clé de chiffrement,
- effacer la valeur de l'élément d'authentification après le calcul de la première clé de chiffrement,
- effacer la valeur de la première clé de chiffrement après son envoi au module de sécurité.

Selon encore une autre caractéristique de l'invention, le module client est adapté pour empêcher l'accès à la valeur l'élément d'authentification du client et à la valeur de la première clé de chiffrement par une autre ressource ou un autre programme, du terminal ou extérieurs au terminal, autre que le module de sécurité.

Toujours selon une autre caractéristique de l'invention, le module client assure la transmission des données à traiter au module de sécurité.

Le module client peut être réalisé de toute manière approprié et notamment être un module logiciel et/ou matériel à la sécurité renforcée afin de résister à des attaques qui tenteraient « d'écouter » la saisie de l'élément d'authentification de l'utilisateur et le résultat du calcul de la première clé de chiffrement.

Bien entendu, les différentes caractéristiques, variantes et formes de mise en oeuvre de du procédé selon l'invention peuvent être associées les unes avec les autres selon diverses combinaisons dans la mesure où elles ne sont pas incompatibles ou exclusives les unes des autres.

Par ailleurs, diverses autres caractéristiques de l'invention ressortent de la description annexée effectuée en référence aux dessins qui illustrent des formes non limitatives du procédé, conforme à l'invention, de mise en oeuvre de données cryptographiques d'un utilisateur.
- La figure 1 illustre de manière schématique un contexte possible de mise en oeuvre de l'invention.
- La figure 2 illustre de manière schématique les différentes étapes d'une première forme du procédé, selon l'invention, de mise oeuvre de données cryptographiques d'un utilisateur dans le cadre du contexte illustré à la figure 1 pour la signature numérique d'un document électronique.
- La figure 3 illustre de manière schématique un autre contexte possible de mise en oeuvre de l'invention.
- La figure 4 illustre de manière schématique les différentes étapes d'une deuxième forme du procédé, selon l'invention, de mise oeuvre de données cryptographiques d'un utilisateur dans le cadre du contexte illustré à la figure 3 pour la signature numérique d'un document électronique.
Il est à noter que sur ces figures les éléments structurels et/ou fonctionnels communs ainsi que les étapes communes aux différentes variantes ou formes peuvent présenter les mêmes références.

L'invention vise à permettre à un utilisateur de mettre en oeuvre des données cryptographiques qui lui sont propres pour procéder à différentes opérations nécessitant l'usage de ces données cryptographiques sans recourir à une carte à puce connectée au terminal T. Par la suite, il sera décrit un usage des données cryptographiques de l'utilisateur pour l'exécution d'une signature numérique. Toutefois, selon l'invention, les données cryptographiques de l'utilisateur pourraient être utilisées pour tout autre processus tel que le déchiffrement de données qui auront été préalablement chiffrées au moyen d'une clé publique de l'utilisateur ou le chiffrement et déchiffrement symétrique au moyen d'une clé symétrique protégée par l'invention

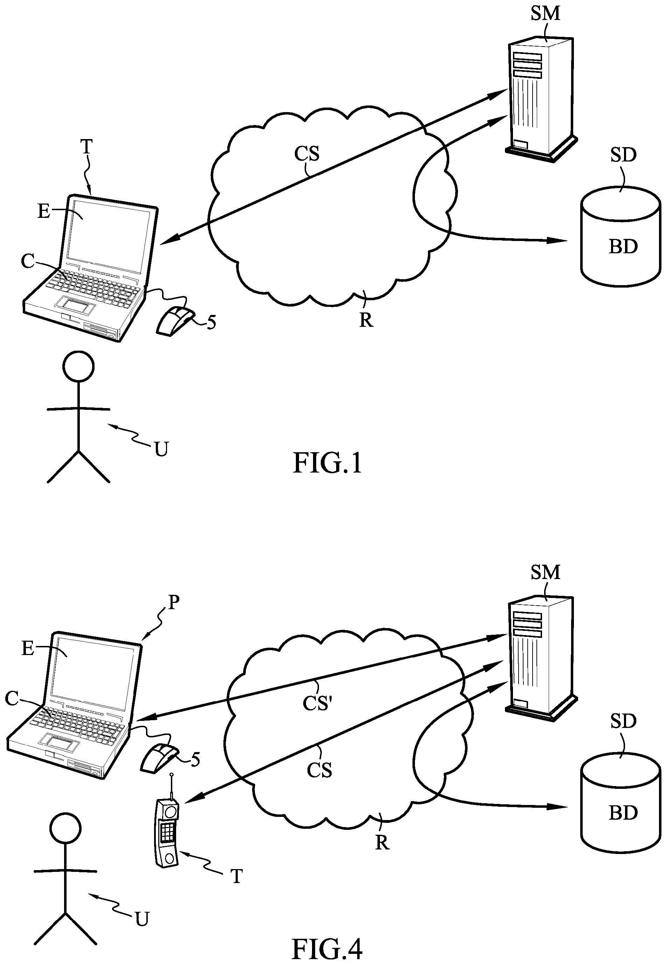

Dans le contexte illustré à la figure 1, l'utilisateur U dispose de l'accès ou de l'usage d'un terminal T formé, par exemple, par un ordinateur personnel comprenant une interface homme machine. Selon l'exemple illustré, l'interface homme machine se compose d'un écran E, tactile ou non, associé à un clavier C ainsi qu'à un dispositif de pointage S tel que par exemple une souris. Le terminal T est en outre raccordé à un réseau de communication R tel que par exemple mais non exclusivement le réseau Internet. Le terminal T possède une clé secrète Tsk qui lui est propre et qui par exemple enregistrée dans un module de sécurité du terminal T. Ce module de sécurité peut être un module matériel ou encore un module logiciel et par exemple un magasin logiciel de clés tels que ceux fournis avec les systèmes d'exploitation ou les navigateurs. La clé secrète du terminal Tsk sera de préférence une clé forte d'une taille supérieure ou égale à 128 bits et de manière plus particulièrement préférée d'une taille supérieure ou égale à 256 bits.L'utilisateur U travaille par exemple au moyen du terminal T sur un document qu'il souhaite signer. Pour ce faire, il doit être utilisé, selon un processus bien connu de l'homme du métier, une clé privée ou secrète Usk propre à l'utilisateur U. Cette clé secrète Usk appartient à un couple clé secrète Usk / clé publique Upk dans le cadre d'une infrastructure à clés publiques. La clé secrète de l'utilisateur Usk est un exemple de données cryptographiques de l'utilisateur qui doivent être conservées de manière protégées dans la mesure où une divulgation ou une compromission de la clé secrète Usk remettrait en cause la confiance pouvant être accordée aux signatures numériques associées à l'utilisateur U. Bien entendu, diverses autres données cryptographiques pourraient être mises en oeuvre dans le cadre de l'invention.

L'invention propose d'assurer la protection de telles données cryptographiques Usk de l'utilisateur U, d'une part, en les enregistrant sous une forme chiffrée dans une base de données BD et, d'autre part, en assurant leur mise en oeuvre dans un module de sécurité SM distant du terminal T après authentification de l'utilisateur U et du terminal T à l'usage de ce dernier.

Le module de sécurité SM peut être réalisé de toute façon appropriée et, par exemple, comprendre un serveur de sécurité comprenant des modules de sécurité matériel HSM et mettant en oeuvre des logiciels de sécurité et/ou des modules de sécurité logiciel. Le module de sécurité SM est raccordé au réseau de communications R. Le module de sécurité SM comprend en outre au moins une clé de chiffrement SMk qui lui est propre et qu'il est le seul à posséder. La taille de la clé de chiffrement SMk est supérieure ou égale à 128 bits et, de préférence, supérieure ou égale à 256 bits.

La base de données BD est, selon l'exemple illustré, enregistrée sur un serveur de données SD qui est raccordé au réseau de communications R. Dans le cas présenté, le serveur de données SD est distinct du module de sécurité SM mais la base de données et/ou le serveur de données pourraient être intégrés au module de sécurité.

La base de données comprend au moins un enregistrement pour l'utilisateur U et de préférence plusieurs enregistrements associés à plusieurs utilisateurs.

Pour un utilisateur donné U l'enregistrement correspondant comprend, par exemple, les données suivantes :
- un élément d'identification de l'utilisateur Uid,
- un élément ZK(PIN) d'authentification de l'utilisateur U,
- un élément d'identification Tid d'au moins un terminal associé à l'utilisateur U,
- un élément ZK(Tsk) d'authentification du terminal,
- les données cryptographiques Usk de l'utilisateur U.
Un même utilisateur U (personne physique) peut posséder plusieurs Uid et PIN et ainsi utiliser des données cryptographiques Usk distinctes à partir du même ou différents terminaux T en fonction du contexte d'utilisation.

L'élément d'authentification ZK(PIN) de l'utilisateur est établi à partir d'un mot de passe PIN connu du seul utilisateur. Un tel mot de passe PIN est généralement formé par une séquence de caractère en un nombre limité de préférence supérieure ou égale à quatre de manière à permettre une mémorisation facile par l'utilisateur U. L'élément d'authentification ZK(PIN) est de préférence distinct du mot de passe PIN et comprend une preuve de connaissance, dudit mode passe PIN, susceptible d'être utilisée dans le cadre d'un protocole d'authentification à divulgation nulle. Un tel protocole, désigné en anglais sous la dénomination de « zero-knowledge protocol », permet comme son nom l'indique de vérifier la connaissance mutuelle d'une information, généralement un secret, par deux systèmes distincts sans communication de l'information en elle-même.

L'élément d'authentification ZK(Tsk) du terminal est établi à partir de la clé secrète Tsk dont seul le terminal est en possession. L'élément d'authentification ZK(Tsk) est de préférence distinct de la clé secrète Tsk et comprend une preuve de connaissance de ladite clé secrète susceptible d'être utilisée dans le cadre d'un protocole d'authentification à divulgation nulle.

Compte tenu de leur importance et de leur caractère critique, l'élément ZK(PIN) d'authentification de l'utilisateur U, l'élément ZK(Tsk) d'authentification du terminal T et les données cryptographiques Usk de l'utilisateur U sont de préférence enregistrés dans la base de données BD sous une forme chiffrée de manière à protéger en confidentialité le contenu des ZK(x) et en intégrité l'association entre les couples « Uid ZK(PIN) » et « Tid ZK(Tsk) » respectivement.

Selon l'invention, les données cryptographiques Usk de l'utilisateur U seront mises en oeuvre par le module de sécurité SM qui procédera alors à l'authentification de l'utilisateur U et du terminal T. Ainsi les éléments d'authentification de l'utilisateur ZK(PIN) et du terminal T ZK(Tsk) sont destinés à être utilisés par le module de sécurité SM de sorte que leur chiffrement au moyen d'une clé SMk propre au module de sécurité SM contribue de manière efficace à leur protection en cas d'accès non autorisé, de divulgation ou d'altération du contenu de la base de données BD.

Les données cryptographiques de l'utilisateur Usk sont quant à elles destinées à être utilisées au sein du module de sécurité SM après authentification de l'utilisateur U et du terminal T qui est à son usage ou qui lui est associé.

Dans ce contexte, un chiffrement au moyen de la clé SMk propre au module de sécurité permet de garantir que les données cryptographiques de l'utilisateur Usk ne sont utilisées que dans le module de sécurité SM. Un chiffrement au moyen de la clé secrète du terminal Tsk permet de garantir que les données cryptographiques de l'utilisateur Usk ne sont utilisables (déchiffrables) qu'en présence du terminal T au moyen de la clé secrète Tsk. Un chiffrement au moyen du mot de passe de l'utilisateur PIN permet de garantir que les données cryptographiques de l'utilisateur Usk ne sont utilisables (déchiffrables) qu'en présence de l'utilisateur U. Ce dernier aspect permet de garantir la non répudiation par l'utilisateur de la mise en oeuvre des données cryptographiques qui lui sont associées dans la mesure où ces dernières ne peuvent être mises en oeuvre qu'en sa présence.

Ainsi, il peut être réalisé un premier chiffrement des données cryptographiques de l'utilisateur Usk au moyen du mot de passe de l'utilisateur PIN, de manière à obtenir des premières données chiffrées ENC(PIN,Usk). Ces premières données chiffrées ENC(PIN, Usk) peuvent ensuite faire l'objet d'un deuxième chiffrement au moyen de la clé secrète du terminal de manière à obtenir des deuxièmes données chiffrées ENC(Tsk,ENC(PIN,Usk)). Ces deuxième données chiffrées ENC(Tsk,ENC(PIN,Usk)) peuvent ensuite faire l'objet d'un troisième chiffrement au moyen de la clé secrète du module de sécurité SMk de manière à obtenir des troisièmes données chiffrées ENC(SMk,ENC(Tsk,ENC(PIN,Usk))) qui seront enregistrées dans la base de données BD. Il sera remarqué que la séquence des chiffrements est réalisée dans l'ordre des entropies de clé croissante et la clé la plus faible étant utilisée en premier.

Dans la mise en oeuvre de l'invention, le chiffrement au moyen du mot de passe de l'utilisateur PIN et de la clé secrète du terminal Tsk est effectué en utilisant une clé de chiffrement KDF établie à partir de la clé secrète du terminal Tsk et du mot de passe de l'utilisateur PIN. La clé de chiffrement KDF est par exemple une clé KDF(Tsk,PIN) qui est dérivée de la clé secret du terminal Tsk et du mot de passe de l'utilisateur PIN au moyen d'une fonction de dérivation de clé telle que par exemple la fonction KDF3 définie par la norme ISO-18033-2 ou NIST SP800-56A.

Les données cryptographiques l'utilisateur Usk font alors l'objet d'un premier chiffrement au moyen d'une première clé de chiffrement correspondant à la clé dérivée KDF(Tsk,PIN), ce qui permet d'obtenir des données chiffrées ENC(KDF(Tsk,PIN),Usk). Ces données chiffrées font ensuite l'objet d'un deuxième chiffrement au moyen d'une deuxième clé de chiffrement correspondant à la clé propre au module de sécurité SMk, ce qui permet d'obtenir les données chiffrées ENC(SMk, ENC(KDF(Tsk,PIN),Usk)) enregistrées dans la base de données BD. L'utilisation de la clé dérivée KDF(Tsk,PIN) lie de manière forte l'authentification conjointe du terminal T et de l'utilisateur U dans la mesure où cette clé dérivée ne peut être obtenue qu'en présence simultanée du terminal T et de l'utilisateur U. Les données chiffrées ENC(SMk, ENC(KDF(Tsk,PIN),Usk)) correspondent à la forme chiffrée des données cryptographiques de l'utilisateur Usk présente dans la base de données BD.

Les données présentes dans la base de données y auront été stockées dans le cadre d'une étape d'initialisation en étant fournie par le module de sécurité qui est le seul à détenir la clé de chiffrement SMk utilisée ici dans le cadre d'un chiffrement symétrique. Le fait que ce soit le module de sécurité SM qui procède à la fourniture des données sensibles évite toute corruption des données contenues dans la base de données BD. Cela garantie que seul le module de sécurité pourra utiliser les données sensibles présentes dans la base de données BD. Ainsi les mesures de protection de la base de données n'ont pas besoins d'être aussi lourdes que celle mises en oeuvre pour le module de sécurité.

Lors de l'étape d'initialisation la clé secrète du terminal Tsk et le mot de passe de l'utilisateur PIN sont choisis et le module de sécurité SM procède à l'enregistrement, dans la base de données des données d'authentification associées sous la forme chiffrée décrite précédemment. Dans le cadre de l'étape d'initialisation, la clé secrète du terminal Tsk et le mot de passe de l'utilisateur PIN peuvent par exemple, être générés par un processus automatisé et transmis à l'utilisateur par courrier sécurisé. L'étape d'initialisation peut également faire intervenir une première connexion au module de sécurité SM au moyen d'un mot de passe à usage unique et à forte entropie qui aura été communiqué à l'utilisateur par courrier sécurisé. La clé secrète du terminal Tsk et le mot de passe de l'utilisateur PIN sont alors choisis ou déterminés dans le cadre de cette première connexion et le module de sécurité les stocke dans la base de donnée BD comme expliqué ci-dessus.

Postérieurement à l'étape d'initialisation, lorsque l'utilisateur U souhaite, selon l'exemple illustré, procéder à la signature d'un document électronique au moyen d'une application fonctionnant sur le terminal T.

Il est tout d'abord établi un canal de communication sécurisée CS entre le terminal T et le module de sécurité SM. Dans une étape 1, Le terminal T adresse alors d'une requête d'établissement du canal de communication sécurisée en adressant l'identifiant du terminal Tid et l'élément d'authentification ZK(Tsk) du terminal.

Dans une étape 2, le module de sécurité SM obtient auprès de la base de données BD via, de préférence, une communication sécurisée avec authentification mutuelle l'élément d'authentification ZK(Tsk) tel qu'enregistré sous une forme chiffrée ENC(SMk, ZK(Tsk)) au moyen de la clé secrète SMk du module de sécurité SM dans la base de données BD. L'identifiant du terminal Tid est alors utilisé comme un index pour interroger la base de données BD.

Dans une étape 3, il est établi un canal sécurisé CS avec clé de session unique au moyen d'un protocole à divulgation nulle utilisant l'élément d'authentification ZK(Tsk) qui aura été déchiffré par le module de sécurité SM au moyen de sa clé secrète SMk. Ce canal sécurisé CS n'est établi qu'en cas d'authentification positive du terminal T.

Le protocole à divulgation nulle mis en oeuvre à l'étape 3 est un protocole dont le principe de fonctionnement est décrit notamment par Louis Guillou et Jean-Jacques Quisquater dans l'article « How to Explain Zero-Knowledge Protocols to Your Children » CRYPTO '89 -Proceedings of the 9th Annual International Cryptology Conference on Advances in Cryptology publié en 1990 par Springer-Verlag London.

Le protocole à divulgation nulle utilisé à l'étape 3 permet, d'une part, au module de sécurité SM d'authentifier le terminal T en vérifiant que le terminal T possède bien la clé secrète Tsk sans que cette clé sécrète Tsk ne transite sur le réseau dans le cadre de cette phase d'authentification. Le protocole à divulgation nulle utilisé à l'étape 3 permet, d'autre part, au terminal T d'authentifier le module de sécurité SM en vérifiant que le module de sécurité SM possède bien la preuve de connaissance de la clé secrète ZK(Tsk) sans que cette preuve de connaissance de la clé secrète ZK(Tsk) ne transite sur le réseau dans le cadre de cette phase d'authentification.

L'authentification du module de sécurité SM au moyen de ZK(Tsk) permet de faire obstacle aux attaques dite de « l'homme du milieu » et évite ainsi une divulgation des données d'authentification à un tiers non autorisé. L'authentification du module de sécurité SM pourrait être faite au moyen de certificats de type X509. Toutefois cette façon de procéder impose de lourds processus de mise à jour des certificats qui sont évités par la mise en oeuvre du protocole à divulgation nulle à l'étape 3.

Par ailleurs, le fait de procéder, selon l'exemple illustré, tout d'abord à l'authentification de terminal T permet d'utiliser une donnée d'authentification Tsk ou ZK(Tsk) qui possède une forte entropie très supérieure à celle de la donnée d'authentification de l'utilisateur à savoir son mot de passe PIN. La mise en oeuvre du module de sécurité SM permet une protection contre les attaques par force brute en limitant le nombre de tentatives possible. De plus, l'utilisation en premier d'une donnée authentification distincte du mot passe de l'utilisateur et présentant une forte entropie permet une protection contre les attaques distribuée qui consiste à tester les mots de passe les plus utilisés pour un grand nombre d'utilisateurs et finit statistiquement par trouver le bon mot de passe pour un utilisateur avant que le mécanisme de limitation du nombre de tentative par utilisateur ne rentre en action.

Après l'authentification mutuelle du terminal T et du module de sécurité SM et établissement du canal de communication sécurisée, il est procédé à une authentification de l'utilisateur U. Dans une étape 4, le terminal T demande à l'utilisateur de saisir son mot de passe PIN au moyen par exemple du clavier C ou, de préférence, d'une interface graphique de saisie qui limite les risques de fuite du mot de passe. Dans une étape 5, l'utilisateur U saisi son mot de passe PIN et dans une étape 6 le terminal établi un élément d'authentification ZK(PIN) à partir de ce mode passe et dans le cas présent une preuve de connaissance du moteur utilisable dans le cadre d'un protocole à divulgation nulle.

Dans une étape 7, le terminal T adresse au module de sécurité SM, via le canal de communication sécurisée établie à l'étape 3, l'identifiant de l'utilisateur Uid et l'élément d'authentification ZK(PIN) de ce dernier. Ensuite, dans une étape 8 le module de sécurité SM obtient auprès de la base de données BD, toujours dans le cadre d'une communication sécurisée avec authentification forte, l'élément d'authentification de l'utilisateur ZK(PIN) sous une forme chiffrée ENC(SMk, ZK(PIN)) au moyen de la clé secrète du module de sécurité SM.

Dans une étape 9, le module de sécurité SM utilise l'élément d'authentification ZK(PIN) qu'il aura déchiffré pour procéder à l'authentification de l'utilisateur U dans le cadre également d'un protocole à divulgation nulle.

Il doit être remarqué que de manière préférée l'authentification du terminal T intervient avant l'authentification de l'utilisateur U. Or, dans la mesure où le terminal T est associé à l'utilisateur U, en cas de vol ou de découverte de Tsk l'attaquant ne peut tester que le mot passe PIN spécifique de l'utilisateur U. Or, le module de sécurité SM fait obstacle à une attaque par force brute tandis que le fait qu'il n'y a qu'un seul utilisateur U ou très faible nombre d'utilisateurs associés à un même terminal T interdit une attaque selon la méthode distribuée.

À ce stade, il a été établi un canal de communication sécurisée CS entre le terminal T et le module de sécurité SM tandis que l'utilisateur U et le terminal T ont été authentifiés par le module de sécurité SM et que le module de sécurité SM a été authentifié par le terminal T. Le canal de sécurité CS n'est, bien sur établi, qu'en cas d'authentifications mutuelles positives.

Dans une étape 10, le terminal T dérive, de sa clé secrète Tsk et du mode passe PIN, la clé de chiffrement KDF(Tsk,PIN) pour ensuite dans une étape 11 l'adresser, via le canal de communication sécurisée CS, au module de sécurité SM. Après cet envoi, le terminal T efface de ses mémoires le mot de passe PIN et la clé de chiffrement dérivée KDF(Tsk,PIN). Il est à noter que l'effacement du mot de passe PIN peut intervenir juste après l'établissement de la clé de chiffrement KDF(Tsk,PIN).

Dans une étape 12, le module de sécurité SM obtient, auprès de la base de données BD, les données cryptographiques de l'utilisateur Usk dans leur forme chiffrée ENC(SMk, ENC(KDF(Tsk,PIN),Usk)).

Dans une étape 13, le module de sécurité SM déchiffre tout d'abord au moyen de sa clé secrète SMk puis au moyen de la clé dérivée KDF(Tsk,PIN) les données cryptographiques de l'utilisateur Usk. À ce stade, le module de sécurité SM n'a plus besoin de la clé dérivée KDF(Tsk,PIN) et peut l'effacer tandis que les données cryptographiques de l'utilisateur Usk sont prêtes à être utilisées et se trouvent donc dans un état activé.

Dans une étape 14, le module de sécurité SM adresse au terminal T une information selon laquelle la mise en oeuvre des données cryptographiques de l'utilisateur est possible.

Dans le cadre d'une signature électronique, le terminal T adresse, dans une étape 15, au module de sécurité SM, via le canal de communication sécurisée CS, une ou plusieurs empreintes numériques SH(DOC) du document électronique à signer. Dans une étape 16 le module de sécurité SM calcule une valeur de signature correspondant au chiffrement ENC(Usk,SH(DOC)) de l'empreinte numérique SH(DOC) au moyen des données cryptographiques Usk de l'utilisateur U et retourne cette valeur au terminal T, via le canal de communication sécurisée CS. Le terminal T peut alors terminer le processus de signature à partir de la valeur reçue du module de sécurité SM.

Lorsque l'étape 16 est finie, le module de sécurité SM peut effacer les données cryptographiques de l'utilisateur Usk et le canal de communication sécurisée CS est fermé.

Il apparaît que le procédé selon l'invention permet une mise en oeuvre des données cryptographiques d'un utilisateur à partir d'un terminal à l'usage de ce dernier sans que jamais ces données cryptographiques ne soient présentent sur le terminal et ne soient soumises à des risques de divulgation ou de corruption. De plus, l'authentification de l'utilisateur associé à celles du terminal permet d'obtenir une authentification plus forte que celle qui serait obtenue par l'authentification de l'utilisateur seulement. Par ailleurs la mise en oeuvre d'un module de sécurité SM distant ainsi qu'une base de données BD distante permet de mettre en oeuvre des mécanismes de surveillance des accès et tentatives d'accès aux systèmes intégrant le module de sécurité et la base de données. Ces mécanismes de surveillance permettent notamment de faire obstacles aux attaques par force brute et de mettre en oeuvre des mécanismes de détection de la fraude par analyse environnementale (origine des requêtes, date et heure...) ou comportementale (statistique d'usage).

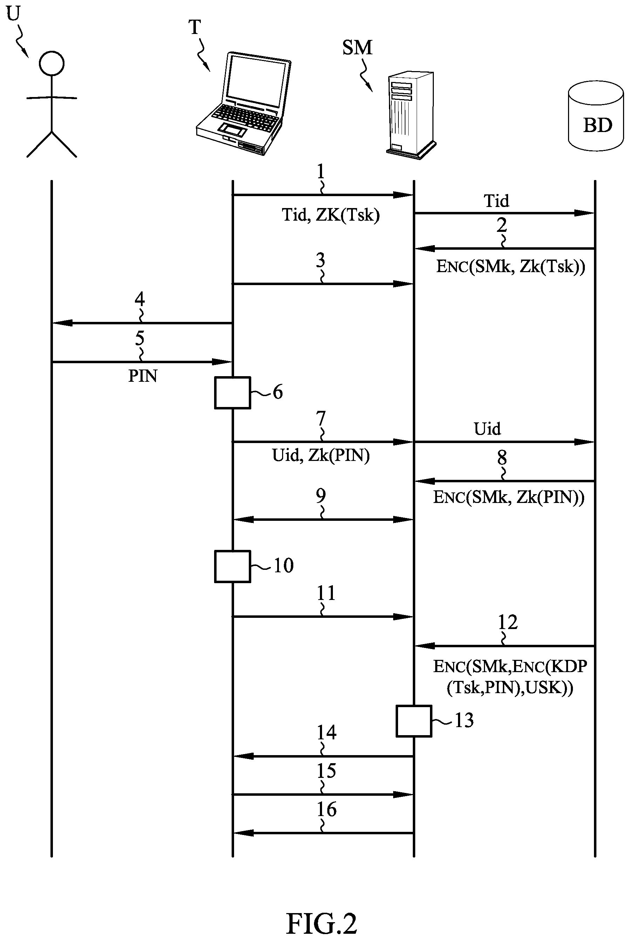

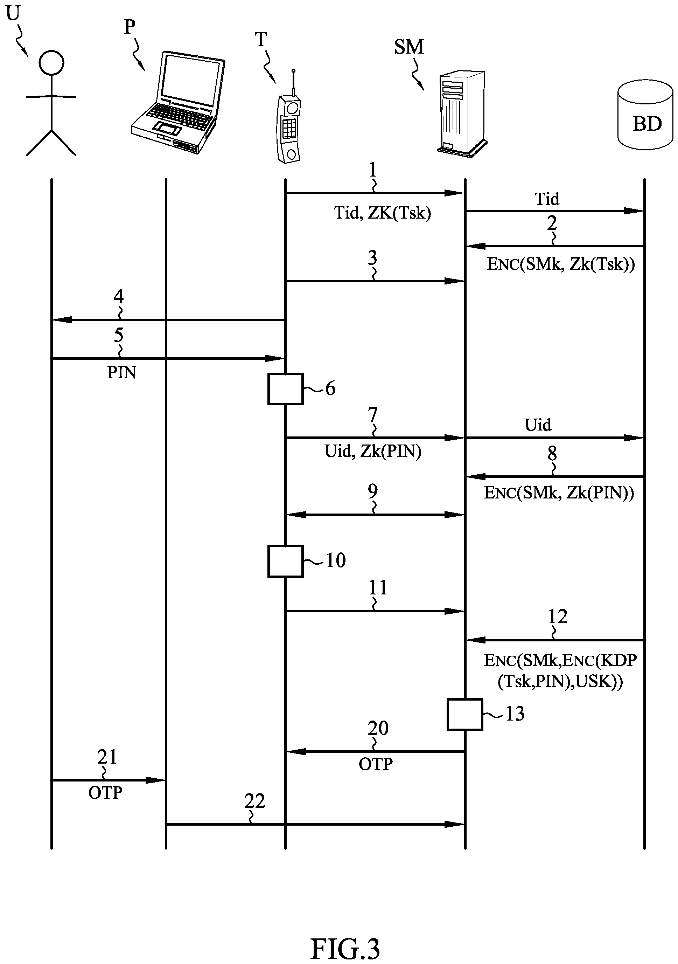

Selon l'exemple décrit précédemment en relation avec les figures 1 et 2, les données à traiter sont adressées au module de sécurité SM par le terminal T à l'usage de l'utilisateur T. Toutefois, selon l'invention, les données à traiter peuvent être adressées au module de sécurité SM par un autre dispositif informatique. Ainsi, les figures 3 et 4 illustrent une autre forme de mise en oeuvre de l'invention selon laquelle les données à traiter sont adressées au module de sécurité SM par un poste de travail P distinct du terminal T.

Selon l'exemple illustre le poste de travail P est formé, par exemple, par un ordinateur personnel comprenant une interface homme machine. Selon l'exemple illustré, l'interface homme machine se compose d'un écran E tactile ou non associé à un clavier C ainsi qu'à un dispositif de pointage S tel que par exemple une souris. Le poste de travail P est en outre raccordé au réseau de communication R.

Le terminal T est quant à lui est formé par un dispositif mobile comme un téléphone portable raccordé également au réseau de communications R.

L'utilisateur U souhaite, par exemple, signer numériquement un document établi sur le poste de travail P. Le procédé selon l'invention met alors en oeuvre les étapes telles qu'illustrée à la figure 4.

Il est tout d'abord procédé à l'activation des données cryptographiques de l'utilisateur Usk au sein du module de sécurité SM par la mise en oeuvre des étapes 1 à 13 telle que décrites précédemment.

Une fois les données cryptographiques Usk prêtes à être mises en oeuvre au sein du module de sécurité SM, ce dernier envoie, dans une étape 20, un mot de passe à usage unique OTP au terminal T en vue de son affichage. Dans une étape 21, l'utilisateur saisit le mot de passe à usage unique OTP sur le poste de travail P. Dans une étape 22, le poste de travail P utilise ce mot de passe à usage unique OTP pour établir un canal de communication sécurisée CS' avec le module de sécurité SM dans le cadre d'un protocole à authentification forte de l'utilisateur. Dans une variante, on peut envisager un protocole d'authentification mutuelle à divulgation nulle, lorsque les données à transmettre vers le SM sont sensibles. Dans un tel cas, le poste P authentifie le SM avant de transmettre les données et le SM authentifie le poste P avant de faire usage de la clé Usk.

Le canal de communication sécurisée CS' est alors utilisé par, d'une part, le poste de travail P pour adresser les données à traiter au module de sécurité SM comme décrit pour l'étape 15 et, d'autre part, par le module de sécurité SM pour adresser le résultat du traitement au poste de travail P comme décrit pour l'étape 16.

Il doit être remarqué que l'établissement du canal de communication sécurisée CS' entre le poste de travail P et le module de sécurité SM pourrait également intervenir avant l'activation des données cryptographiques de l'utilisateur au sein du module de sécurité SM.

Dans les exemples décrits précédemment l'authentification du terminal T et de l'utilisateur U sont effectuées successivement. Toutefois, selon l'invention il est possible de réaliser ces deux authentifications de façon conjointe. Pour ce faire il peut être utilisé une preuve de connaissance ZK(KDF(Tsk,PIN)) de la clé KDF(Tsk,PIN) dans le cadre d'un protocole à divulgation nulle au moment de l'établissement de la communication entre le terminal T et le module de sécurité. Dans ce cas le mot passe PIN est saisi sur le terminal T puis la clé dérivée KDF(Tsk,PIN) est générée avant l'authentification et l'établissement de la communication entre le terminal T et le module de sécurité SM. Dans ce cas preuve de connaissance ZK(KDF(Tsk,PIN)) est enregistrée dans la base de donnée BD.

Selon l'exemple de mise en oeuvre de l'invention décrit précédemment la forme chiffrée des données cryptographiques de l'utilisateur Usk présente dans la base de données BD correspond à ENC(SMk, ENC(KDF(Tsk,PIN),Usk)). Toutefois selon l'invention, les données cryptographiques l'utilisateur Usk peuvent aussi faire l'objet d'un premier chiffrement au moyen d'une première clé de chiffrement correspondant à la clé propre au module de sécurité SMk, ce qui permet d'obtenir des données chiffrées ENC(SMk, Usk). Ces données chiffrées font ensuite l'objet d'un deuxième chiffrement au moyen d'une deuxième clé de chiffrement correspondant à la clé dérivée KDF(Tsk,PIN) ce qui permet d'obtenir les données chiffrées ENC(KDF(Tsk,PIN), ENC(SMk,Usk)) qui sont alors enregistrées dans la base de données BD. Cette façon de procéder permet d'associer un nouveau terminal T' à l'utilisateur U sans qu'il soit besoin de connaître ou de déchiffrer la clé sécrète de l'utilisateur Usk. En effet, dans une étape d'inscription d'un nouveau terminal T' associé à une clé sécrète T'sk, l'utilisateur U peut au moyen de son terminal T déjà enregistré se faire authentifier ainsi que le terminal T auprès du module de sécurité SM comme décrit précédemment étapes 1 à 12. Au moyen de KDF(Tsk,PIN) le module de sécurité SM procède au déchiffrement de ENC(KDF(Tsk,PIN), ENC(SMk,Usk)) pour obtenir ENC(SMk,Usk) qu'il peut alors à nouveau chiffrer au moyen de KDF(T'sk,PIN) qu'il aura obtenu par un canal sécurisé établi après une authentification mutuelle du nouveau terminal T' et du module de sécurité SM effectué au moyen par exemple d'un mot de passe à usage unique affiché sur le premier terminal T ou d'un code d'activation envoyé à l'utilisateur par un moyen alternatif (de manière non exhaustif, par courrier, téléphone, SMS, email). Une fois cette inscription effectuée, le nouveau terminal T' peut être utilisé de la même manière que le terminal T.

Dans les formes de mise en oeuvre décrites précédemment, il est utilisé en tant qu'élément d'authentification de l'utilisateur son mot de passe PIN. Toutefois, il pourrait également être utilisé en tant d'élément d'authentification de l'utilisateur une donnée biométrique telle qu'une empreinte digitale lue au moyen d'un lecteur d'empreinte digitale équipant le terminal T. Dans le cadre de cette forme de mise en oeuvre, la base de données BD comprend, d'une part, un premier élément d'authentification de l'utilisateur comprenant les données biométrique relative à l'empreinte de l'utilisateur et, d'autre part, un deuxième élément d'authentification de l'utilisateur comprenant le mot de passe PIN de l'utilisateur.

Cette forme de mise en oeuvre du procédé selon l'invention fait tout d'abord intervenir les étapes 1 à 3 d'authentification du terminal T et du module de sécurité SM ainsi que d'établissement du canal de communication sécurisé CS. Ensuite intervient une authentification de l'utilisateur U. A cet effet, l'utilisateur U fait lire son empreinte digitale par le lecteur d'empreinte du terminal T. Le résultat de la lecture est envoyé au module de sécurité SM par le canal sécurisé CS. Le module de sécurité SM effectue une comparaison entre le résultat de la lecture et le premier élément d'authentification de l'utilisateur qu'il aura obtenu de la base de données BD. En cas de comparaison positive le processus se poursuit par une requête de saisie du mot de passe de l'utilisateur U sur le terminal T jusqu'à la mise en oeuvre des données cryptographiques de l'utilisateur comme décrit précédemment pour les étapes 4 à 16.

De manière préférée, le terminal met en oeuvre un module client qui assure la gestion des différentes étapes du procédé selon l'invention et, notamment, les différents calculs, requêtes de saisie, communications avec le module de sécurité des phases d'initialisation et de mise en oeuvre de l'invention.

Bien entendu, diverses autres modifications peuvent être apportées à l'invention dans le cadre des revendications annexées.

## Revendications

1. Procédé de mise en oeuvre, par un module de sécurité (SM), de données cryptographiques (Usk) d'un utilisateur (U), stockées dans une base de données (BD), au moyen d'un terminal (T) à l'usage de l'utilisateur et communiquant avec le module de sécurité (SM) via un réseau de communication (R), procédé comprenant les étapes et séquences suivantes:
- une séquence d'authentification comprenant les étapes successives suivantes :
- authentification mutuelle entre le module de sécurité (SM) et le terminal (T), reposant sur un protocole de cryptographie asymétrique, établissant un canal sécurisé entre le module de sécurité (SM) et le terminal (T),
- en cas d'authentification mutuelle positive du module de sécurité et du terminal, authentification mutuelle du module de sécurité et de l'utilisateur,
- en cas d'authentification mutuelle positive entre, d'une part, le module de sécurité et le terminal et, d'autre part, le module de sécurité et l'utilisateur :
- obtention des données cryptographiques de l'utilisateur (Usk) par le module de sécurité (SM) auprès de la base de données (BD), les données cryptographiques étant stockées dans la base de données (BD) sous une forme chiffrée au moyen d'au moins une première clé de chiffrement (KDF(Tsk,PIN)) établie à partir d'au moins une clé sécrète du terminal (Tsk) et de l'élément d'authentification de l'utilisateur (PIN) et d'une deuxième clé de chiffrement (SMk) propre au module de sécurité (SM), le chiffrement au moyen de la deuxième clé de chiffrement intervenant après le chiffrement au moyen de la première clé de chiffrement,
- calcul par le terminal de la première clé de chiffrement (KDF(Tsk,PIN)),
- envoi via le canal sécurisé par le terminal au module de sécurité, de la première clé de chiffrement,
- mise en oeuvre des données cryptographiques de l'utilisateur (Usk) par le module de sécurité (SM) après déchiffrement, par le module de sécurité(SM) des données cryptographiques de l'utilisateur (Usk) au moins au moyen tout d'abord de la deuxième clé de chiffrement (SMk) puis de la première clé de chiffrement (KDF(Tsk,PIN)).

2. Procédé selon la revendication 1, **caractérisé en ce que** les étapes de contrôle d'authenticité sont effectuées au moyen :
- d'au moins un élément d'authentification du terminal (ZK(Tsk)),
- et d'au moins un élément d'authentification de l'utilisateur (ZK(PIN)),
obtenus par le module de sécurité (SM) auprès de la base de données (BD),les éléments d'authentification étant stockées dans la base de données (BD) sous une forme chiffrée au moyen d'une clé de chiffrement (SMk) propre au module de sécurité (SM).

3. Procédé selon la revendication 2, **caractérisé en ce qu'**il est utilisé un élément ZK(Tsk) d'authentification du terminal établi en partie au moins à partir d'une clé sécrète du terminal (Tsk) stockée dans le terminal (T).

4. Procédé selon la revendication 3, **caractérisé en ce que** l'élément d'authentification du terminal comprend une preuve ZK(Tsk) de possession de la clé secrète du terminal (Tsk) par le terminal (T) destinée à être utilisée dans le cadre d'un protocole d'authentification à divulgation nulle.

5. Procédé selon l'une des revendications 2 à 4, **caractérisé en ce qu'**il est utilisé un élément ZK(PIN) d'authentification de l'utilisateur (U) établi en partie au moins à partir d'un mot de passe PIN saisi par l'utilisateur (U).

6. Procédé selon la revendication 6, **caractérisé en ce que** l'élément d'authentification de l'utilisateur (U) comprend une preuve ZK(PIN) de connaissance du mot de passe PIN destinée à être utilisée dans le cadre d'un protocole d'authentification à divulgation nulle.

7. Procédé selon l'une des revendications précédentes **caractérisé en ce que** le module de sécurité (SM) met en oeuvre les données cryptographiques de l'utilisateur (Usk) pour effectuer des traitements cryptographiques sur des données à traiter reçues via le réseau de communication (R) et sécurisées par le canal sécurisé établi lors de l'authentification mutuelle entre le module de sécurité et le terminal.

8. Procédé selon la revendication 7, **caractérisé en ce que** les données à traiter comprennent des données utilisées dans le cadre d'un processus de signature numérique d'un document électronique.

9. Procédé selon l'une des revendications précédentes, **caractérisé en ce que** le terminal met en oeuvre un module client qui gère au moins les communications avec le module de sécurité, la saisie de l'élément d'authentification de l'utilisateur, la séquence d'authentification et le calcul de la première clé de chiffrement.

10. Procédé selon la revendication 9, **caractérisé en ce que** le module client est adapté pour :
- conserver la valeur de l'élément d'authentification du client du moment de sa saisie par l'utilisateur et jusqu'au calcul de la première clé de chiffrement,
- effacer la valeur de l'élément d'authentification après le calcul de la première clé de chiffrement,
- effacer la valeur de la première clé de chiffrement après son envoi au module de sécurité.

11. Procédé selon la revendication 9 ou 10, **caractérisé en ce que** le module client est adapté pour empêcher l'accès à la valeur l'élément d'authentification du client et à la valeur de la première clé de chiffrement par une autre ressource ou un autre programme, du terminal ou extérieurs au terminal, autre que le module de sécurité.

12. Procédé selon la revendication 7 ou 8 et l'une des revendications 9 à 11, **caractérisé en ce que** le module client assure la transmission des données à traiter au module de sécurité.

## Patentansprüche

1. Verfahren zur Verwendung von kryptografischen Daten (Usk) eines Benutzers (U), die in einer Datenbank (BD) gespeichert sind, durch ein Sicherheitsmodul (SM) mittels eines dem Benutzer zur Verfügung stehenden und mit dem Sicherheitsmodul (SM) über ein Kommunikationsnetz (R) kommunizierenden Endgeräts (T), wobei das Verfahren die folgenden Schritte und Sequenzen aufweist:
- eine Authentifizierungssequenz, die die folgenden, aufeinanderfolgenden Schritte aufweist:
- gegenseitige Authentifizierung zwischen dem Sicherheitsmodul (SM) und dem Endgerät (T) auf der Basis eines asymmetrischen Kryptografieprotokolls, das einen abgesicherten Kanal zwischen dem Sicherheitsmodul (SM) und dem Endgerät (T) einrichtet,
- im Fall einer positiven gegenseitigen Authentifizierung des Sicherheitsmoduls und des Endgeräts, gegenseitige Authentifizierung des Sicherheitsmoduls und des Benutzers,
- im Fall einer positiven gegenseitigen Authentifizierung zwischen dem Sicherheitsmodul und dem Endgerät einerseits und dem Sicherheitsmodul und dem Benutzer andererseits:
- Erhalten der kryptografischen Daten (Usk) des Benutzers von der Datenbank (BD) durch das Sicherheitsmodul (SM), wobei die kryptografischen Daten in der Datenbank (BD) in einer mittels wenigstens eines ersten, aus wenigstens einem geheimen Schlüssel (Tsk) des Endgeräts und dem Authentifikationselement (PIN) des Benutzers gebildeten Chiffrierschlüssels (KDF(Tsk,PIN)) und eines zweiten, dem Sicherheitsmodul (SM) eigenen Chiffrierschlüssels (SMk) gebildeten chiffrierten Form eingespeichert sind, wobei die Chiffrierung mittels des zweiten Chiffrierschlüssels nach der Chiffrierung mittels des ersten Chiffrierschlüssels erfolgt,
- Berechnen des ersten Chiffrierschlüssels (KDF(Tsk,PIN)) durch das Endgerät,
- Übersenden des ersten Chiffrierschlüssels durch das Endgerät über den abgesicherten Kanal an das Sicherheitsmodul,
- Verwenden der kryptografischen Daten (Usk) des Benutzers durch das Sicherheitsmodul (SM) nach Dechiffrierung der kryptografischen Daten (Usk) des Benutzers, durch das Sicherheitsmodul (SM), mittels zunächst des zweiten Chiffrierschlüssels (SMk) und dann des ersten Chiffrierschlüssels (KDF(Tsk,PIN)).

2. Verfahren gemäß Anspruch 1, **dadurch gekennzeichnet, daß** die Schritte der Kontrolle der Authentizität mittels
- wenigstens eines Authentifikationselements (ZK(Tsk))des Endgeräts und
- wenigstens eines Authentifikationselements (ZK(PIN)) des Benutzers
ausgeführt werden, die durch das Sicherheitsmodul (SM) von der Datenbank (BD) erhalten werden, wobei die Authentifikationselemente in der Datenbank (BD) in einer mittels eines dem Sicherheitsmodul (SM) eigenen Chiffrierschlüssels (SMk) chiffrierten Form eingespeichert sind.

3. Verfahren gemäß Anspruch 2, **dadurch gekennzeichnet, daß** ein Authentifikationselement (ZK(Tsk))des Endgeräts verwendet wird, das wenigstens zum Teil aus einem im Endgerät (T) gespeicherten geheimen Schlüssel (Tsk) des Endgeräts gebildet ist.

4. Verfahren gemäß Anspruch 3, **dadurch gekennzeichnet, daß** das Authentifikationselement des Endgeräts einen Beweis (ZK(Tsk)) darüber aufweist, daß das Endgerät (T) im Besitz des geheimen Schlüssels (Tsk) des Endgeräts ist, und der Beweis dazu bestimmt ist, im Rahmen eines verbreitungsfreien Authentifikationsprotokolls verwendet zu werden.

5. Verfahren gemäß einem der Ansprüche 2 bis 4, **dadurch gekennzeichnet, daß** ein Authentifikationselement (ZK(PIN)) des Benutzers (U) verwendet wird, das wenigstens zum Teil aus einem vom Benutzer (U) eingegebenen Paßwort (PIN) gebildet ist.

6. Verfahren gemäß Anspruch 5, **dadurch gekennzeichnet, daß** das Authentifikationselement des Benutzers (U) einen Beweis (ZK(PIN)) bezüglich der Kenntnis des Paßworts (PIN) aufweist, der dazu bestimmt ist, im Rahmen eines verbreitungsfreien Authentifikationsprotokolls verwendet zu werden.

7. Verfahren gemäß einem der vorangehenden Ansprüche, **dadurch gekennzeichnet, daß** das Sicherheitsmodul (SM) die kryptografischen Daten (Usk) des Benutzers verwendet, um die kryptografische Behandlung der zu verarbeitenden Daten, die über das Kommunikationsnetz (R) und gesichert durch den während der gegenseitigen Authentifizierung zwischen dem Sicherheitsmodul und dem Endgerät eingerichteten abgesicherten Kanal erhalten worden sind, vorzunehmen.

8. Verfahren gemäß Anspruch 7, **dadurch gekennzeichnet, daß** die zu verarbeitenden Daten Daten aufweisen, die im Rahmen eines Verfahrens eines digitalen Unterschreibens eines elektronischen Dokuments verwendet werden.

9. Verfahren gemäß einem der vorangehenden Ansprüche, **dadurch gekennzeichnet, daß** das Endgerät ein Kundenmodul verwendet, das wenigstens die Kommunikationen mit dem Sicherheitsmodul, das Eingeben des Authentifikationselements des Benutzers, die Authentifizierungssequenz und das Berechnen des ersten Chiffrierschlüssels steuert.

10. Verfahren gemäß Anspruch 9, **dadurch gekennzeichnet, daß** das Kundenmodul dazu ausgelegt ist,
- den Wert des Authentifikationselements des Kunden vom Zeitpunkt des Eingebens durch den Benutzer bis zum Berechnen des ersten Chiffrierschlüssels zu behalten,
- den Wert des Authentifikationselements nach dem Berechnen des ersten Chiffrierschlüssels zu löschen,
- den Wert des ersten Chiffrierschlüssels nach dessen Übersendung an das Sicherheitsmodul zu löschen.

11. Verfahren gemäß Anspruch 9 oder 10, **dadurch gekennzeichnet, daß** das Kundenmodul dazu ausgelegt ist, den Zugang zum Wert des Authentifikationselements des Kunden und zum Wert des ersten Chiffrierschlüssels durch eine andere Quelle oder ein anderes Programm des Endgeräts oder von außerhalb des Endgeräts, die oder das nicht das Sicherheitsmodul ist, zu verhindern.

12. Verfahren gemäß Anspruch 7 oder 8 und einem der Ansprüche 9 bis 11, **dadurch gekennzeichnet, daß** das Kundenmodul die Übertragung der zu verarbeitenden Daten an das Sicherheitsmodul sicherstellt.

## Claims

1. Method for implementing, by a security module (SM), of cryptographic data (Usk) for a user (U), stored in a database (BD), by means of a terminal (T) for the use of the user and communicating with the security module (SM) via a communication network (R), method comprising the following steps and sequences:
- an authentication sequence comprising the following successive steps:
- - mutual authentication between the security module (SM) and thee terminal (T),
based on an asymmetric encrypttion protocol, establishing a secure channel between the security module (SM) and the terminal (T),
- - in case of positive mutual authentication of the security module and of the terminal, mutual authentication of the security module and of the user,
- in case of positive mutual authentication between, on the one hand, the security module and the terminal and, on the other hand, the security module and the user:
- - obtaining of the cryptographic data from the user (Usk) by the security module (SM) from the database (DB), the cryptographic data being stored in the database (DB) in an encrypted form by means of at least one first encryption key (KDF(Tsk,PIN)) established from at least one secret key of the terminal (Tsk) and of the authentication element of the user (PIN) and of a second encryption key (SMk) proper to the security module (SM), the encryption by means of the second encryption key intervening after the encryption by means of the first encryption key,
- - calculating by the terminal of the first encryption key (KDF(Tsk,PIN)),
- - sending via the secure channel by the terminal to the security module, of the first encryption key,
- - implementing of the cryptographic data from the user (Usk) by the security module (SM) after encryption, by the security module(SM) of the cryptographic data from the user (Usk) at least by means first of all of the second encryption key (SMk) then of the first encryption key (KDF(Tsk,PIN)).

2. Method according to claim 1, **characterized in that** the steps of checking the authenticity are carried out by means:
- of at least one authentication element of the terminal (ZK(Tsk)),
- and of at least one authentication element of the user (ZK(PIN)),
obtained by the security module (SM) from the database (DB), the authentication elements being stored in the database (DB) in an encrypted form by means of an encryption key (SMk) proper to the security module (SM).

3. Method according to claim 2, **characterized in that** an element ZK(Tsk) is used for authenticating the terminal established in part at least from a secret key of the terminal (Tsk) stored in the terminal (T).

4. Method according to claim 3, **characterized in that** the authentication element of the terminal comprises a proof ZK(Tsk) of possession of the secrete key of the terminal (Tsk) by the terminal (T) intended to be used in the framework of a zero disclosure authentication protocol.

5. Method according to one of claims 2 to 4, **characterized in that** an element ZK(PIN) for authenticating the user (U) is used established in part at least from a PIN password entered by the user (U).

6. Method according to claim 6, **characterized in that** the authentication element of the user (U) comprises a proof ZK(PIN) of knowledge of the PIN password intended to be used in the framework of a zero disclosure authentication protocol.

7. Method according to one of the preceding claims **characterized in that** the security module (SM) implements the cryptographic data of the user (Usk) in order to carry out cryptographic processing on data to be processed received via the communication network (R) and secured by the secure channel established during the mutual authentication between the security module and the terminal.

8. Method according to claim 7, **characterized in that** the data to be processed comprises data used in the framework of a digital signature process of an electronic document.

9. Method according to one of the preceding claims, **characterized in that** the terminal implements a client module that manages at least the communications with the security module, the entering of the authentication element of the user, the authentication sequence and the calculation of the first encryption key.

10. Method according to claim 9, **characterized in that** the client module is suitable for:
- retaining the value of the authentication element of the client from the moment it is entered by the user and until the calculation of the first encryption key,
- erasing the value of the authentication element after the calculation of the first encryption key,
- erasing the value of the first encryption key after it is sent to the security module.

11. Method according to claim 9 or 10, **characterized in that** the module client is suitable for preventing access to the value of the authentication element of the client and to the value of the first encryption key by another resource or another program, of the terminal or outside the terminal, other than the security module.

12. Method according to claim 7 or 8 and one of claims 9 to 11, **characterized in that** the client module provides the transmission of the data to be processed to the security module.
